**Europäisches Patentamt**

**European Patent Office**

**Office européen des brevets**

(19)

(11) Veröffentlichungsnummer: **0 495 353 A1**

## EUROPÄISCHE PATENTANMELDUNG

(12)

(21) Anmeldenummer: **92100041.0**

(22) Anmeldetag: **03.01.92**

(51) Int. Cl.⁵: **A23N 15/00**

(30) Priorität: **12.01.91 DE 4100766**

(43) Veröffentlichungstag der Anmeldung:
**22.07.92 Patentblatt 92/30**

(84) Benannte Vertragsstaaten:
**BE DE DK ES FR GB IT NL PT SE**

(71) Anmelder: **HERBORT MASCHINENBAU GMBH**
**Hamburger Strasse 268**
**W-3300 Braunschweig(DE)**

(72) Erfinder: **Borvitz, Wolfgang Dipl.Ing.**
**Memeler Str.25**
**W-3300 Braunschweig(DE)**

(74) Vertreter: **Gramm, Werner, Prof. Dipl.-Ing.**
**Patentanwälte Gramm + Lins**
**Theodor-Heuss-Strasse 1**
**W-3300 Braunschweig(DE)**

(54) **Verfahren und Vorrichtung zum Ausschneiden von Gemüseköpfen.**

(57) Die Erfindung betrifft ein Verfahren und eine Vorrichtung zum Ausschneiden von Gemüseköpfen, Früchten oder Teilen davon, die an ihrer Unterseite einen mittleren Teil (Strunk) aufweisen, der entlang einer halbkugelförmigen oder spitzbogenförmigen Fläche vom umgebenden Teil herausgeschnitten werden soll, insbesondere von Blumenkohl (6), wobei der Durchmesser (d) des Blumenkohls (6) festgestellt und der so ermittelte Wert zur Einstellung und Steuerung des das Ausschneiden durchführenden, auf einer Kreisbahn geführten Messers (14) verwendet wird, und zwar insbesondere zur Anpassung des Durchmessers der Messer-Kreisbahn und der Eindringtiefe des Messers (14). Zur Verbesserung des Verfahrens bzw. der Vorrichtung wird vorgeschlagen, daß zusätzlich auch die Höhe des zu bearbeitenden Blumenkohls abgetastet wird, und daß die Werte für Durchmesser und Höhe in elektrische Signale umgeformt und dann zu Einstellsignalen verarbeitet werden, die zur elektromechanischen Steuerung des Schneidvorganges in der Form verwendet werden, daß die genannte Verstellung des Durchmessers der Messer-Kreisbahn unabhängig von der der Messer-Eindringtiefe erfolgt.

Figur 1

Die Erfindung betrifft ein Verfahren zum Ausschneiden von Gemüseköpfen, Früchten oder Teilen davon, die an ihrer Unterseite einen mittleren Teil (Strunk) aufweisen, der entlang einer halbkugelförmigen oder spitzbogenförmigen Fläche vom umgebenden Teil herausgeschnitten werden soll, insbesondere von Blumenkohl, wobei der Durchmesser des Blumenkohls festgestellt und der so ermittelte wert zur Einstellung und Steuerung des das Ausschneiden durchführenden, auf einer Kreisbahn geführten Messers verwendet wird, und zwar insbesondere zur Anpassung des Durchmessers der Messer-Kreisbahn und der Eindringtiefe des Messers.

Die Erfindung betrifft ferner eine Vorrichtung zum Ausschneiden von Gemüseköpfen, Früchten oder Teilen davon, die an ihrer Unterseite einen mittleren Teil (Strunk) aufweisen, der entlang einer halbkugelförmigen oder spitzbogenförmigen Fläche vom umgebenden Teil herausgeschnitten werden soll, insbesondere von Blumenkohl, mit einer Aufnahme für den Blumenkohl, einer dessen Durchmesser feststellenden Abtasteinrichtung und einem unterhalb der Aufnahme angeordneten, über einen Rotationsantrieb antreibbaren, vorzugsweise um eine lotrechte Achse drehbaren Schneidkopf, der mit einem gebogenen Messer bestückt ist, das gegen die genannte Achse gebogen ist, um diese umläuft und auf einem bezogen auf diese Achse konvexen Kreisbogen über einen periodisch arbeitenden Hubantrieb zwischen einer unteren inaktiven Stellung und einer oberen Schneidstellung verschwenkbar ist, in der die freie Messerspitze die genannte Achse zumindest erreicht, und ferner mit einer von der genannten Abtasteinrichtung beaufschlagten Verstelleinrichtung zur Verstellung des Durchmessers sowie der Höhe der Messer-Umlaufbahn.

Soweit nachfolgend Bezug genommen wird auf zu verarbeitenden Blumenkohl, so soll diese Gemüseangabe jeweils nur beispielsweise gelten.

Der eingangs erläuterte Stand der Technik läßt sich der DE-OS 27 50 820 entnehmen. Als Aufnahme für den zu verarbeitenden Blumenkohl dient ein um eine lotrechte Achse umlaufender Drehteller mit z.B. sechs Öffnungen zur Aufnahme je eines Blumenkohls. Über eine Antriebskette erfolgt eine schrittweise Drehung des Drehtellers sowie die Hub- und Absenkbewegung des Messers. Über einen zweiten Motor erfolgt der Rotationsantrieb für den Schneidkopf. Zum Festhalten des eingesetzten Blumenkohls dienen verschwenkbare Haltearme, die unter Federbelastung gegen den Außenumfang des Blumenkohlkopfes gedrückt werden können. Einer dieser Haltearme dient sogleich zur Feststellung des Durchmessers des Blumenkohlkopfes und verändert über eine Nocken-Steuerung den Durchmesser der Messer-Umlaufbahn. Auch das Anheben bzw. Absenken des Messers wird über Nocken gesteuert. Dabei besteht eine kinematische Zwangskopplung zwischen der Verstellung des Durchmessers sowie der Höhe der Messer-Umlaufbahn derart, daß die Verstellung des einen Parameters zugleich auch eine zwangsweise Verstellung des anderen Parameters bewirkt.

Als nachteilig erweisen sich die geringen Verstellmöglichkeiten der vorbekannten Vorrichtung, so daß sich Blumenkohlköpfe kleinster und größter Abmessung nicht ohne weiteres nacheinander verarbeiten lassen; es ist vielmehr eine Vorsortierung der Blumenkohlköpfe hinsichtlich ihrer Größe erforderlich. Nachteilig ist ferner, daß sich der Durchmesser des auszuschneidenden Strunkes nicht unabhängig von der Höhe des auszuschneidenden Strunkes steuern läßt.

Der Erfindung liegt die Aufgabe zugrunde, das eingangs erläuterte Verfahren zu präzisieren und hierfür eine geeignete Vorrichtung zu schaffen.

Diese Aufgabe wird erfindungsgemäß dadurch gelöst, daß zusätzlich auch die Höhe des zu bearbeitenden Blumenkohls abgetastet wird, und daß die Werte für Durchmesser und Höhe in elektrische Signale umgeformt und dann zu Einstellsignalen verarbeitet werden, die zur elektromechanischen Steuerung des Schneidvorganges in der Form verwendet werden, daß die genannte Verstellung des Durchmessers der Messer-Kreisbahn unabhängig von der der Messer-Eindringtiefe erfolgt.

Hinsichtlich der Vorrichtung wird die genannte Aufgabe durch folgende Merkmale gelöst:

a) eine zusätzliche Abtasteinrichtung für eine Höhenabtastung des Blumenkohls;

b) Meßwertaufnehmer zur Umformung der von den beiden Abtasteinrichtungen ermittelten Größen in elektrische Signale für ein elektronisches Leitsystem;

c) die von der Abtasteinrichtung beaufschlagte Verstelleinrichtung für das Messer umfaßt einen von dem elektronischen Leitsystem separat beaufschlagbaren Antrieb für die Höhenverstellung des Schneidkopfes gegenüber dem Drehtisch (Höhenverstellantrieb) sowie einen ebenfalls von dem Leitsystem separat beaufschlagbaren Antrieb für eine Radialverschiebung des Messerträgers (Radialverstellantrieb).

Erfindungsgemäß ist somit eine Bearbeitung ohne Vorsortierung des Blumenkohls möglich. Der Schneidvorgang läßt sich leicht an geänderte Produktabmessungen anpassen. Das Ausschneiden unterschiedlicher Strunkabmessungen ist ohne Messeraustausch möglich.

Eine mit dem gattungsbildenden Stand der Technik vergleichbare Vorrichtung läßt sich auch der europäischen Patentanmeldung A2-0244387 entnehmen, die sich allerdings durch einen besonders aufwendigen und komplizierten mechanischen Aufbau auszeichnet, wobei alle Verstellfunktionen rein mechanisch gesteuert werden. Diesem Stand der Technik gegenüber führt die erfindungsgemäße Lösung zu einem erheblich vereinfachten Aufbau der Maschine. Durch die erfindungsgemäße elektromechanische Steuerung ist es möglich, alle Funktionsverstellungen unmittelbar im Schneidkopf zusammenzufassen, die übrige Vorrichtung also hiervon völlig freizuhalten.

Erfindungsgemäß werden die einzelnen Funktionsteile des Schneidkopfes jeweils unterteilt in einen unteren drehfest gehaltenen Teil, der über einen separat ansteuerbaren Antrieb höhenverstellbar geführt ist und ein oberes drehbar antreibbares, sich auf ihm abstützendes Funktionsteil trägt. So kann z.B. vorgesehen sein, daß der Schneidkopf einen unteren, drehfest gehaltenen, von dem Höhenverstellantrieb gegenüber dem Maschinengestell jedoch höhenverschiebbaren Teil (Bodenteil) aufweist, auf dem sich über ein Stützlager ein oberes Teil (Kopfteil) abstützt, das über den Rotationsantrieb drehbar ist und den radial verschiebbaren Messerträger trägt. Die Radialverschiebung des Messerträgers erfolgt dabei vorzugsweise über ein höhenverschiebbar geführtes, von dem Radialverstellantrieb beaufschlagtes Verstellglied, das mit einer Keilschräge an der Unterseite einer korrespondierenden Keilschräge des Messerträgers anliegt.

Um die genannten Keilschrägen beim Betrieb weitgehend von der auf den Messerträger einwirkenden Zentrifugalkraft zu entlasten, ist es vorteilhaft, wenn sich der Messerträger in Richtung der bei Rotation auf ihn einwirkenden Zentrifugalkraft gegen eine Druckfeder oder dergl. abstützt.

Zur Erzielung einer größtmöglichen Laufruhe des rotierenden Schneidkopfes ist es vorteilhaft, wenn dem Messerträger ein zumindest angenähert gleiche Masse aufweisendes Ausgleichsgewicht zugeordnet ist, das um 180° versetzt angeordnet und spiegelbildlich gesehen der gleichen Radialverschiebung unterworfen ist wie der Messerträger.

Im Vergleich zu den vorbekannten Vorrichtungen liegt der Verschleiß bei der erfindungsgemäßen Ausführungsform erheblich niedriger. Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung schematisch dargestellt. Es zeigen:

Figur 1     eine Vorrichtung zum Ausschneiden von Gemüseköpfen oder dergl. in Seitenansicht;

Figur 2     den in Figur 1 dargestellten Drehtisch in Draufsicht und

Figur 3     in vergrößertem Maßstab einen lotrechten Schnitt insbesondere durch einen Schneidkopf.

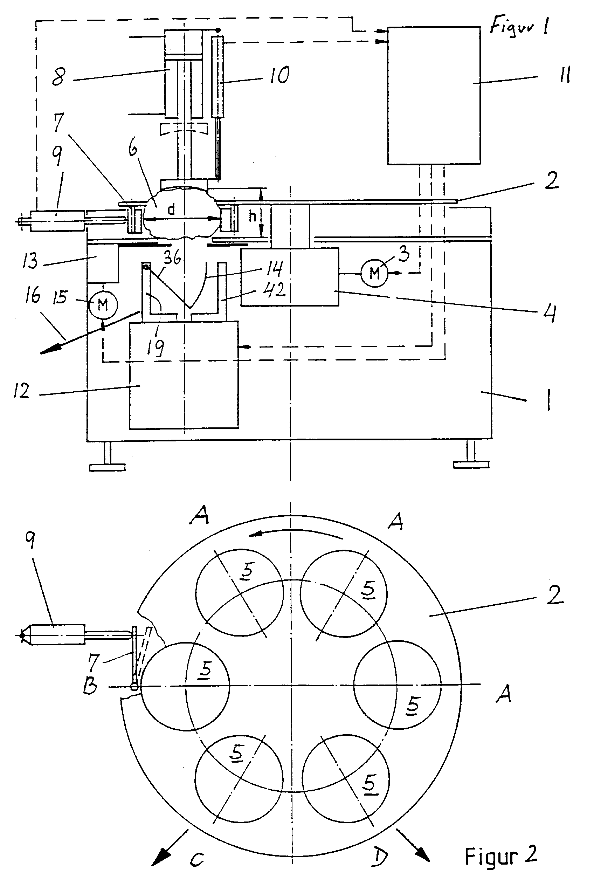

Die in Figur 1 schematisch dargestellte Vorrichtung weist ein Maschinengestell 1 auf, das auf seiner Oberseite einen um eine lotrechte Achse drehbaren Drehtisch 2 trägt, der über einen Motor 3 sowie ein Schrittschaltgetriebe 4 antreibbar ist. Der Drehtisch 2 weist sechs Öffnungen 5 zur Aufnahme je eines Blumenkohlkopfes 6 auf und wird bei jeder Schrittschaltung um den Winkelabstand zwischen zwei Öffnungen 5 verdreht.

Der zu bearbeitende Blumenkohlkopf 6 wird bei einer der in Figur 2 eingezeichneten Positionen A in eine Öffnung 5 des Drehtisches 2 eingelegt; der Drehtisch 2 wird dann über das Schrittschaltgetriebe 4 in die Position B verdreht, wo der Blumenkohl durch an seinen Außenumfang anlegbare Spannarme 7 sowie eine Höhenabtastung 8 hinsichtlich Durchmesser und Höhe erfaßt wird. Durch ein den Spannarmen 7 zugeordneten Meßwertaufnehmer 9 sowie einen der Höhenabtastung 8 zugeordneten Meßwertaufnehmer 10 werden die erfaßten Werte für Durchmesser d und Höhe h in elektrische Signale umgeformt und an ein elektronisches Leitsystem 11 übergeben. Der Drehtisch 2 wird daraufhin in die Position C verdreht, wobei gleichzeitig die ermittelten Größenparameter durch das Leitsystem 11 in Einstellsignale für einen Schneidkopf 12 verarbeitet werden, der über die Einstellsignale elektromechanisch so eingestellt wird, daß sich ein Schneidvorgang ergibt, der den Strunk mit gewünschten Abmessungen heraustrennt. Dabei erfolgt der Schneidvorgang in mehreren Teilschritten: zuerst wird eine unterhalb der Öffnung 5 des Drehtisches 2 vorgesehene Blende 13 auf den zum Durchlaß des Messers 14 erforderlichen Durchmesser geöffnet und zwar über einen Motor 15, der ebenso wie der Motor 3 für den Antrieb des Drehtisches 2 von dem Leitsystem 11 gesteuert wird. Der Schneidvorgang wird durch Auf- und Abwärtsschwenken des Messers 14 ausgeführt, das während der Verarbeitung kontinuierlich rotiert. Auch diese Steuerung erfolgt über das elektronische Leitsystem 11. Der ausgeschnittene Strunk wird mit der Abwärtsbewegung des Messers 14 nach unten gefördert und durch die Drehbewegung des Schneidkopfes 12 in Richtung des Pfeiles 16 aus der Maschine geworfen. Anschließend wird die Blende 13 geschlossen; der Drehtisch 2 wird in die Position D gedreht, wo der Blumenkohl nach unten aus der Maschine herausfällt. Durch das Weiterfördern durch den Drehtisch 2 sowie durch das Herabfallen zerfällt der Blumenkohl in einzelne Röschen.

Bei jedem Weiterdrehen des Drehtisches 2 erfolgt in den Positionen A bis D der beschriebene Ablauf, wobei das Leitsystem 11 alle Bewegungsabläufe steuert und koordiniert. Durch Verändern von elektrischen Stellgrößen kann der Benutzer der Maschine die Schneidparameter (Zuordnung des Strunkdurchmessers und der Strunkhöhe) zu den erfaßten Meßgrößen verstellen. Die Einstellung des Strunkdurchmessers sowie der Strunkhöhe kann unabhängig voneinander erfolgen, wobei das Leitsystem 11 eine geringe gegenseitige Beeinflussung der Parameter automatisch kompensiert.

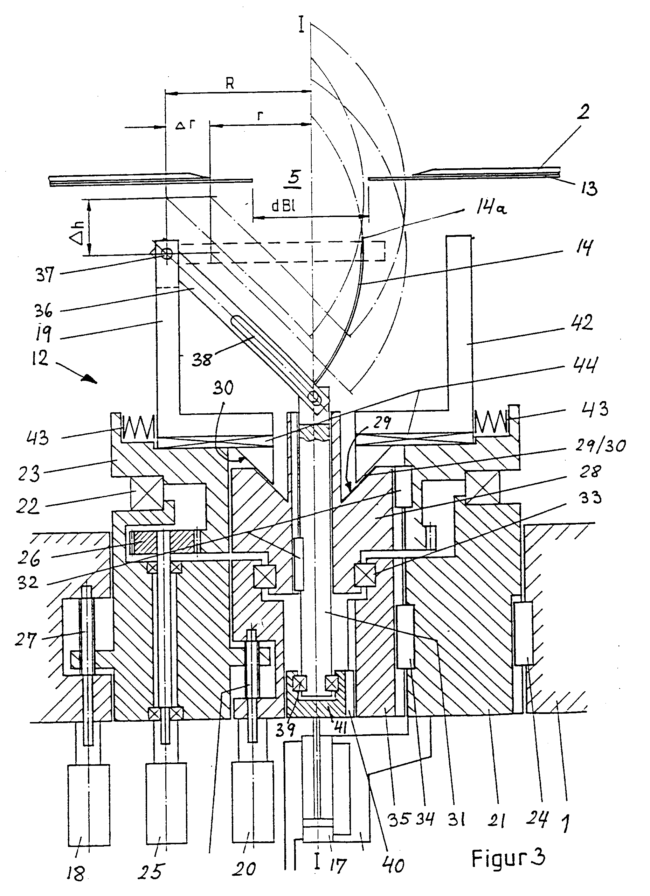

Figur 3 zeigt ein Ausführungsbeispiel für den Schneidkopf 12:

Der Schneidkopf 12 weist eine lotrechte Drehachse I-I auf. Oberhalb des Schneidkopfes 12 ist der Drehtisch 2 mit seiner Öffnung 5 zur Aufnahme des zu verarbeitenden, in Figur 3 jedoch nicht näher dargestellten Blumenkohls angedeutet. Eingezeichnet ist ferner die unterhalb der Aufnahme 2, 5 angeordnete verstellbare Blende 13. Der Schneidkopf 12 ist mit einem gebogenen Messer 14 bestückt, das gegen die genannte Drehachse I-I gebogen ist, um diese umläuft und auf einem bezogen auf diese Achse I-I konvexen Kreisbogen über einen periodisch arbeitenden Hubantrieb 17 zwischen einer unteren inaktiven Stellung und einer oberen Schneidstellung verschwenkbar ist, in der die freie Messerspitze 14a die genannte Achse I-I zumindest erreicht.

Die von den Abtasteinrichtungen 7, 8 beaufschlagte Verstelleinrichtung für das Messer 14 umfaßt einen von dem elektronischen Leitsystem 11 separat beaufschlagbaren Antrieb für die Höhenverstellung des Schneidkopfes 12 gegenüber dem Drehtisch 2, nachfolgend Höhenverstellantrieb 18 genannt, sowie einen ebenfalls von dem Leitsystem 11 separat beaufschlagbaren Antrieb für eine Radialverschiebung des Messerträgers 19, nachfolgend Radialverstellantrieb 20 genannt.

Der Schneidkopf 12 weist einen unteren, drehfest gehaltenen, von dem Höhenverstellantrieb 18 gegenüber dem Maschinengestell 1 jedoch höhenverschiebbaren Bodenteil 21 auf, auf dem sich über ein Stützlager 22 ein oberes Kopfteil 23 abstützt, das über einen Rotationsantrieb drehbar ist und den radialverschiebbaren Messerträger 19 trägt. Das Bodenteil 21 ist durch eine Führung 24 gegen Verdrehen gesichert. Der Höhenverstellantrieb 18 ist beispielhaft als Gewindespindel und Mutter dargestellt. Durch den Höhenverstellantrieb 18 kann die Lage des Schneidsystems in Bezug auf das Maschinengestell 1 und damit zur Auflage 2, 5 verändert werden (Δh). Der genannte Rotationsantrieb umfaßt einen Antriebsmotor 25, der über eine Welle und eine Zahnradstufe 26 das Kopfteil 23 antreibt. Der Höhenverstellantrieb 18 verschiebt das Bodenteil 21 durch Drehen einer Spindel 27 in lotrechter Richtung.

Die Radialverschiebung des Messerträgers 19 erfolgt über ein höhenverschiebbar geführtes, von dem Radialverstellantrieb 20 beaufschlagtes Verstellglied 28, das mit einer Keilschräge 29 an der Unterseite einer korrespondierenden Keilschräge 30 des Messerträgers 19 anliegt. Das Verstellglied 28 ist als Buchse ausgebildet und auf einer Schubstange 31 verschiebbar gelagert und es steht über einen Mitnehmer 32 in Rotationsverbindung mit dem Kopfteil 23, ist diesem gegenüber jedoch höhenverschieblich. Das Verstellglied 28 stützt sich über ein Stützlager 33 an einem über eine Führung 34 gegen Verdrehung gesicherten, von dem Radialverstellantrieb 20 gegenüber dem Bodenteil 21 höhenverschiebbaren Grundkörper 35 ab.

Die Hubbewegung des Messers 14 erfolgt über die vorstehend erwähnte Schubstange 31, die über zwei Mitnehmer 32 in Drehverbindung mit dem Kopfteil 23 steht, diesem gegenüber aber durch den Hubantrieb 17 relativ höhenverschiebbar ist. Dieser Hubantrieb ist ein Linearantrieb, der z.B. durch einen Pneumatikzylinder gebildet sein kann und sich am Bodenteil 21 abstützt.

Das Messer 14 ist an einem Lenker 36 angelenkt, der mit seinem einen Ende bei 37 an dem Messerträger 19 angelenkt und mit seinem anderen Ende in einer Langlochführung 38 am oberen Ende der Schubstange 31 längsverschieblich geführt ist. Diese Schubstange 31 stützt sich an ihrem unteren Ende über ein Stützlager 39 an einem über eine Führung 40 drehfest gehaltenen, von dem Antrieb 17 gegenüber dem Bodenteil 21 jedoch höhenverschiebbaren Hubteil 41 ab. Die von dem Hubantrieb 17 bewirkte Hubbewegung wird auf den Messerträger 19 übertragen; das Messer 14 wird nach oben geschwenkt, bis seine Messerspitze 14a die Rotationsachse I-I erreicht. Dabei wird durch die Drehbewegung des Messers 14 ein angenähert konischer Strunk ausgeschnitten. Nach erfolgtem Schnitt bewegt der Hubantrieb 17 das Messer 14 in seine Grundstellung zurück.

Dem Messerträger 19 ist ein zumindest angenähert gleiche Masse aufweisendes Ausgleichsgewicht 42 zugeordnet, das um 180° versetzt angeordnet und spiegelbildlich gesehen der gleichen Radialverschiebung unterworfen ist wie der Messerträger 19. Dabei stützen sich der Messerträger 19 und das Ausgleichsgewicht 42 in Richtung der bei Rotation auf sie einwirkenden Zentrifugalkraft gegen je eine Druckfeder 43 ab. Messerträger 19 und Ausgleichsgewicht 42 sind über Linearführungen 44 auf dem Kopfteil 23 radial verschiebbar geführt.

Der Schneidkopf 12 umfaßt somit mehrere unabhängig voneinander verschiebbare Systeme, die die Verstellung der Schneidparameter "Höhe" sowie "Durchmesser" bewirken. Die Systeme bestehen jeweils aus einem unteren, höhenverschiebbaren, jedoch nicht rotierenden Teil, auf dem sich jeweils ein oberes rotierendes Teil abstützt. Beide Teile sind jeweils so entkoppelt, daß ein gemeinsames Verschieben in vertikaler Richtung möglich bleibt.

**Patentansprüche**

1. Verfahren zum Ausschneiden von Gemüseköpfen, Früchten oder Teilen davon, die an ihrer Unterseite einen mittleren Teil (Strunk) aufweisen, der entlang einer halbkugelförmigen oder spitzbogenförmigen Fläche vom umgebenden Teil herausgeschnitten werden soll, insbesondere von Blumenkohl, wobei der Durchmesser des Blumenkohls festgestellt und der so ermittelte Wert zur Einstellung und Steuerung des das Ausschneiden durchführenden, auf einer Kreisbahn geführten Messers verwendet wird, und zwar insbesondere zur Anpassung des Durchmessers der Messer-Kreisbahn und der Eindringtiefe des Messers, **dadurch gekennzeichnet,** daß zusätzlich auch die Höhe des zu bearbeitenden Blumenkohls abgetastet wird, und daß die Werte für Durchmesser und Höhe in elektrische Signale umgeformt und dann zu Einstellsignalen verarbeitet werden, die zur elektromechanischen Steuerung des Schneidvorganges in der Form verwendet werden, daß die genannte Verstellung des Durchmessers der Messer-Kreisbahn unabhängig von der der Messer-Eindringtiefe erfolgt.

2. Vorrichtung zum Ausschneiden von Gemüseköpfen, Früchten oder Teilen davon, die an ihrer Unterseite einen mittleren Teil (Strunk) aufweisen, der entlang einer halbkugelförmigen oder spitzbogenförmigen Fläche vom umgebenden Teil herausgeschnitten werden soll, insbesondere von Blumenkohl, mit einer Aufnahme (2, 5) für den Blumenkohl (6), einer dessen Durchmesser (d) feststellenden Abtasteinrichtung (7) und einem unterhalb der Aufnahme (2, 5) angeordneten, über einen Rotationsantrieb antreibbaren, vorzugsweise um eine lotrechte Achse (I-I) drehbaren Schneidkopf (12), der mit einem gebogenen Messer (14) bestückt ist, das gegen die genannte Achse (I-I) gebogen ist, um diese umläuft und auf einem bezogen auf diese Achse (I-I) konvexen Kreisbogen über einen periodisch arbeitenden Hubantrieb (17) zwischen einer unteren inaktiven Stellung und einer oberen Schneidstellung verschwenkbar ist, in der die freie Messerspitze (14a) die genannte Achse (I-I) zumindest erreicht, und ferner mit einer von der genannten Abtasteinrichtung (7) beaufschlagten Verstelleinrichtung zur Verstellung des Durchmessers sowie der Höhe der Messer-Umlaufbahn, insbesondere zur Durchführung des Verfahrens nach Anspruch 1, gekennzeichnet durch folgende Merkmale:

   a) eine zusätzliche Abtasteinrichtung (8) für eine Höhenabtastung des Blumenkohls (6);
   b) Meßwertaufnehmer (9, 10) zur Umformung der von den beiden Abtasteinrichtungen (7, 8) ermittelten Größen in elektrische Signale für ein elektronisches Leitsystem (11);
   c) die von der Abtasteinrichtung (7, 8) beaufschlagte Verstelleinrichtung für das Messer (14) umfaßt einen von dem elektronischen Leitsystem (11) separat beaufschlagbaren Antrieb für die Höhenverstellung des Schneidkopfes (12) gegenüber dem Drehtisch (2) (Höhenverstellantrieb 18) sowie einen ebenfalls von dem Leitsystem (11) separat beaufschlagbaren Antrieb für eine Radialverschiebung des Messerträgers (19) (Radialverstellantrieb 20).

3. Vorrichtung nach Anspruch 2, dadurch gekennzeichnet, daß der Schneidkopf (12) einen unteren, drehfest gehaltenen, von dem Höhenverstellantrieb (18) gegenüber dem Maschinengestell (1) jedoch höhenverschiebbaren Teil (Bodenteil 21) aufweist, auf dem sich über ein Stützlager (22) ein oberes Teil (Kopfteil 23) abstützt, das über den Rotationsantrieb (25, 26) drehbar ist und den radial verschiebbaren Messerträger (19) trägt.

4. Vorrichtung nach Anspruch 3, dadurch gekennzeichnet, daß die Radialverschiebung des Messerträgers (19) über ein höhenverschiebbar geführtes, von dem Radialverstellantrieb (20) beaufschlagtes Verstellglied (28) erfolgt, das mit einer Keilschräge (29) an der Unterseite einer korrespondierenden Keilschräge (30) des Messerträgers (19) anliegt.

5. Vorrichtung nach Anspruch 4, dadurch gekennzeichnet, daß das Verstellglied (28) verschiebbar gelagert ist, in Rotationsverbindung mit dem Kopfteil (23) des Schneidkopfes (12) steht, jedoch relativ gegenüber diesem Kopfteil (23) höhenverschieblich ist.

6. Vorrichtung nach Anspruch 4 oder 5, dadurch gekennzeichnet, daß sich das Verstellglied (28) über ein Stützlager (33) an einem drehfest gehaltenen, von dem Radialverstellantrieb (20) gegenüber dem Bodenteil (21) des Schneidkopfes (12) jedoch höhenverschiebbaren Grundkörper (35) abstützt.

7. Vorrichtung nach einem der Ansprüche 2 bis 6, dadurch gekennzeichnet, daß die Hubbewegung des Messers (14) über eine Schubstange (31) erfolgt, die in Drehverbindung mit dem Kopfteil (23) des Schneidkopfes (12) steht, diesem gegenüber aber durch den Hubantrieb (17) relativ höhenverschiebbar ist.

8. Vorrichtung nach Anspruch 7, dadurch gekennzeichnet, daß das Messer (14) an einem Lenker (36) befestigt ist, der mit seinem einen Ende an dem Messerträger (19) angelenkt und mit seinem anderen Ende in einer Langlochführung (38) am oberen Ende der Schubstange (31) längsverschieblich geführt ist.

9. Vorrichtung nach Anspruch 7 oder 8, dadurch gekennzeichnet, daß sich die Schubstange (31) an ihrem unteren Ende über ein Stützlager (39) an einem drehfest gehaltenen, von dem Hubantrieb (17) gegenüber dem Bodenteil (21) des Schneidkopfes (12) jedoch höhenverschiebbaren Hubteil (41) abstützt.

10. Vorrichtung nach Anspruch 7, 8 oder 9, dadurch gekennzeichnet, daß das Verstellglied (28) als Buchse ausgebildet ist und auf der Schubstange (31) verschiebbar gelagert ist.

11. Vorrichtung nach einem der Ansprüche 2 bis 10, dadurch gekennzeichnet, daß dem Messerträger (19) ein zumindest angenähert gleiche Masse aufweisendes Ausgleichsgewicht (42) zugeordnet ist, das um 180° versetzt angeordnet und spiegelbildlich gesehen der gleichen Radialverschiebung unterworfen ist wie der Messerträger (19).

12. Vorrichtung nach einem der Ansprüche 2 bis 11, dadurch gekennzeichnet, daß sich der Messerträger (19) und ggfs. auch das Ausgleichsgewicht (42) in Richtung der bei Rotation auf sie einwirkenden Zentrifugalkraft gegen je eine Druckfeder (43) oder dergl. abstützen.

Figur 1

Figur 2

Figur 3

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 244 387 (PROGRESSIVE FOOD ENGINEERING AB) * Seite 3, Zeile 19 - Seite 15, Zeile 18; Abbildungen 1-4 * | 1,2 | A23N15/00 |
| A | | 3,7-9 | |
| | --- | | |
| D,Y | FR-A-2 371 887 (PRODUITS FINDUS S.A.) * Seite 6, Zeile 29 - Seite 11, Zeile 15; Abbildungen 1-5 * | 1,2 | |
| D,A | | 7,9 | |
| | --- | | |
| A | US-A-4 176 595 (SHAW R.A.) * Spalte 2, Zeile 9 - Spalte 4, Zeile 9; Abbildungen 1,2 * | 1-3 | |
| | ----- | | |
| | | | **RECHERCHIERTE SACHGEBIETE (Int. Cl.5)** |
| | | | A23N |

Der vorliegende Recherchenbericht wurde für alle Patentansprüche erstellt

| Recherchenort | Abschlußdatum der Recherche | Prüfer |
|---|---|---|
| DEN HAAG | 06 MAI 1992 | ELSWORTH D. |